# EUROPEAN PATENT APPLICATION

(11) **EP 4 567 649 A1**
(43) Date of publication of application: **11.06.2025**
(21) Application number: 23867051.7
(22) Date of filing: 28.06.2023
(51) Int. Cl.: G06F 21/57

(54) **COMPUTER DEVICE AND RUNNING METHOD THEREOF, AND SECURITY CHIP**

(30) Priority: 19.09.2022 CN 202211139911
(71) Applicant: Huawei Technologies Co., Ltd., Shenzhen, Guangdong 518129 (CN)
(72) Inventor: ZHANG, Rui, Shenzhen, Guangdong 518129 (CN); HU, Kekai, Shenzhen, Guangdong 518129 (CN)
(74) Representative: Huawei European IPR
(86) International application number: PCT/CN2023/103448
(87) International publication number: WO 2024/060756

(57) **Abstract**

This application discloses a computer device, an operating method thereof, and a security chip, and pertains to the field of confidential computing technologies. The computer device includes a processing chip and a security chip. The security chip is configured to: operate a root of trust, boot the processing chip based on the root of trust, and perform trusted control on the processing chip. The processing chip includes a trusted execution environment, the trusted execution environment is constructed based on the root of trust, and the trusted execution environment is used for confidential computing. In this application, a trust degree of the root of trust in the security chip is no longer subject to a trust degree of a vendor of the processing chip, and a current situation in which construction of the trusted execution environment is limited to the vendor of the processing chip is eliminated, thereby improving a trust degree of confidential computing.

## Description

This application claims priority to Chinese Patent Application No. 202211139911.3, filed on September 19, 2022 and entitled "COMPUTER DEVICE, OPERATING METHOD THEREOF, AND SECURITY CHIP", which is incorporated herein by reference in its entirety.

### TECHNICAL FIELD

This application relates to the field of confidential computing technologies, and in particular, to a computer device, an operating method thereof, and a security chip.

### BACKGROUND

With rapid development of computer technologies, data security attracts increasingly attention. A current protection policy for data security usually applies to data that is stored statically or data that is in a network transmission state. However, when data is in use, data security is still at risk. Therefore, protecting the data in use is a problem to be urgently resolved.

Currently, a confidential computing (confidential computing) technology can be used to protect data in use. In the international confidential computing consortium (confidential computing consortium, CCC), confidential computing is defined as a technology used to protect data in use by performing computation in a hardware-based trusted execution environment. Because the computation process is performed in the trusted execution environment (trusted execution environment, TEE), data related to the computation process can be protected. Confidential computing can protect security of the data in use, and a key point of confidential computing is to rely on a trust chain of the trusted execution environment, and the trust chain needs to be constructed based on a root of trust in a processing chip that performs computation.

However, a trust degree of the root of trust is subject to a trust degree of a vendor of the processing chip. As a result, a trust degree of confidential computing is also affected by the trust degree of the vendor of the processing chip.

### SUMMARY

This application provides a computer device, an operating method thereof, and a security chip. In this application, a trust degree of the root of trust in the security chip is no longer subject to a trust degree of a vendor of the processing chip, and a current situation in which construction of the trusted execution environment is limited to the vendor of the processing chip is eliminated, thereby improving a trust degree of confidential computing. The technical solutions provided in this application are as follows:
According to a first aspect, this application provides a computer device. The computer device includes a processing chip and a security chip. The security chip is configured to: operate a root of trust, boot the processing chip based on the root of trust, and perform trusted control on the processing chip. The processing chip includes a trusted execution environment, the trusted execution environment is constructed based on the root of trust, and the trusted execution environment is used for confidential computing.

In the computer device provided in this application, the security chip and the processing chip are separately disposed, to implement decoupling between the security chip and the processing chip. Security of the security chip may be ensured and endorsed by a vendor of the security chip. In this way, a trust degree of the root of trust in the security chip is no longer subject to a trust degree of a vendor of the processing chip, and a current situation in which construction of the trusted execution environment is limited to the vendor of the processing chip is eliminated, thereby improving a trust degree of confidential computing, and eliminating distrust of a user on the vendor of the processing chip. Because the security chip is decoupled from the processing chip, the security chip can be connected to different types of processing chips, and compatibility of the entire computer device with a plurality of chips is improved. This helps promote development of a large-scale confidential computing application scenario and promote a standardization process of a confidential computing security ecosystem.

Optionally, the root of trust includes one or more of the following: a root for boot, a root for measurement, and a root for encryption. The root for boot is used to securely boot the processing chip. The root for measurement is used to prove to a remote user that an operating state of the computer device is secure and reliable, that is, implement remote attestation. The root for encryption is used to encrypt memory space of the trusted execution environment, to ensure that no plaintext leakage occurs in a memory.

In an implementation, the security chip is specifically configured to: obtain, by using the root of trust, a firmware image used to boot the processing chip, and after the processing chip is powered on, boot the processing chip by using the firmware image.

After the root of trust is placed outside the processing chip, a key problem is how to continue to ensure that the root of trust itself and communication between the root of trust and the processing chip are secure and reliable. Therefore, in this application, some security assurance mechanisms are further provided while the root of trust is externally deployed. In a possible implementation, an access control mechanism and/or a communication protection mechanism may be set in the computer device, to ensure security and reliability of the root of trust and ensure security and reliability of communication between the security chip and the processing chip. The following separately describes the access control mechanism and the communication protection mechanism.

In an implementation of the access control mechanism, the processing chip includes a first access control module. The first access control module is configured to: receive an access request for the root of trust, and forward the access request to the security chip when the access request has access permission, or reject the access request when the access request does not have access permission. The security chip is further configured to respond to the access request.

In another implementation of the access control mechanism, the security chip includes a second access control module. The second access control module is configured to: receive an access request for the root of trust, and respond to the access request when the access request has access permission, or reject the access request when the access request does not have access permission.

In yet another implementation of the access control mechanism, the processing chip includes a third access control module, and the security chip includes a fourth access control module. The third access control module is configured to: receive an access request for the root of trust, obtain permission indication information of the access request, and forward the access request and the permission indication information of the access request to the security chip. The fourth access control module is configured to: respond to the access request when the permission indication information indicates that the access request has access permission, or reject the access request when the permission indication information indicates that the access request does not have access permission.

The root of trust is a root of trust of the trusted execution environment. For the root of trust, the trusted execution environment has a high security level, and the root of trust can be accessed by the trusted execution environment. Therefore, an access request from the trusted execution environment has access permission, and an access request from an outside of the trusted execution environment does not have access permission.

The access request is authenticated by using the access control mechanism, so that it can be ensured that access from the trusted execution environment is valid, and access from outside the trusted execution environment is shielded, so that security and reliability of the root of trust can be ensured.

The following describes the communication protection mechanism. In this application, the communication protection mechanism may be implemented through cooperation between the processing chip and the security chip. In an implementable of the communication protection mechanism, the processing chip includes a first communication protection module, the security chip includes a second communication protection module, and the second communication protection module matches the first communication protection module. In this case, the first communication protection module and the second communication protection module jointly protect communication between the security chip and the processing chip. For example, the first communication protection module performs a first communication protection measure on content of communication between the security chip and the processing chip, and the second communication protection module performs a second communication protection measure on content of communication between the security chip and the processing chip, where the second communication protection measure matches the first communication protection measure. Alternatively, the second communication protection module performs a first communication protection measure on content of communication between the security chip and the processing chip, and the first communication protection module performs a second communication protection measure on content of communication between the security chip and the processing chip, where the second communication protection measure matches the first communication protection measure.

When the communication protection mechanism is implemented, one or more policies may be used between the first communication protection module and the second communication protection module to ensure security of communication between the security chip and the processing chip. In an implementation, the first communication protection module and the second communication protection module are specifically configured to protect communication between the security chip and the processing chip according to a key policy, to ensure confidentiality of communication between the security chip and the processing chip.

Optionally, the first communication protection module and the second communication protection module are further specifically configured to protect communication between the security chip and the processing chip according to at least one of a signature policy and a timestamp policy, to ensure integrity of communication between the security chip and the processing chip, and prevent content of communication between the security chip and the processing chip from being forged and tampered with.

Optionally, the security chip is further configured to perform a remote attestation process. The security chip can use the root for measurement to implement the remote attestation process. In an implementation, the security chip is further configured to: receive a measurement value generated by the processing chip in a boot process, receive a security verification request for the trusted execution environment, generate a measurement report based on the measurement value, and feed back the measurement report based on the security verification request.

Optionally, the computer device further includes a memory chip, and the processing chip includes a memory encryption module. The security chip is further configured to encrypt the memory. The security chip can use the root for encryption to implement remote attestation. In a possible implementation, the security chip is further configured to: generate a key by using the root of trust, and provide the key to the memory encryption module. The memory encryption module is configured to: encrypt memory data by using the key, provide encrypted memory data to the memory chip and/or obtain encrypted memory data from the memory chip, and decrypt the encrypted memory data by using the key. The memory chip is configured to: store the encrypted memory data and/or provide the encrypted memory data to the memory encryption module.

According to a second aspect, this application provides an operating method for a computer device. The computer device includes a processing chip and a security chip. The operating method for a computer device includes: The security chip operates a root of trust, boots the processing chip based on the root of trust, and performs trusted control on the processing chip; and the processing chip constructs a trusted execution environment based on the root of trust, where the trusted execution environment is used for confidential computing.

Optionally, that the security chip boots the processing chip based on the root of trust includes: The security chip obtains, by using the root of trust, a firmware image used to boot the processing chip; and after the processing chip is powered on, the security chip boots the processing chip by using the firmware image.

Optionally, the root of trust includes one or more of the following: a root for boot, a root for measurement, and a root for encryption.

Optionally, the processing chip includes a first access control module, and the operating method for a computer device further includes: The first access control module receives an access request for the root of trust, and forwards the access request to the security chip when the access request has access permission, or rejects the access request when the access request does not have access permission; and the security chip responds to the access request.

Optionally, the security chip includes a second access control module, and the operating method for a computer device further includes: The second access control module receives an access request for the root of trust, and responds to the access request when the access request has access permission, or rejects the access request when the access request does not have access permission.

Optionally, the processing chip includes a third access control module, the security chip includes a fourth access control module, and the operating method for a computer device further includes: The third access control module receives an access request for the root of trust, obtains permission indication information of the access request, and forwards the access request and the permission indication information of the access request to the security chip; and the fourth access control module responds to the access request when the permission indication information indicates that the access request has access permission, and rejects the access request when the permission indication information indicates that the access request does not have the access permission.

Optionally, an access request from the trusted execution environment has access permission, and an access request from an outside of the trusted execution environment does not have access permission.

Optionally, the processing chip includes a first communication protection module, the security chip includes a second communication protection module, the second communication protection module matches the first communication protection module, and the operating method for a computer device further includes: The first communication protection module and the second communication protection module jointly protect communication between the security chip and the processing chip.

Optionally, both the first communication protection module and the second communication protection module protect communication between the security chip and the processing chip according to a key policy.

Optionally, both the first communication protection module and the second communication protection module protect communication between the security chip and the processing chip according to at least one of a signature policy and a timestamp policy.

Optionally, the operating method for a computer device further includes: The security chip receives a measurement value generated by the processing chip in a boot process; the security chip receives a security verification request for the trusted execution environment; and the security chip generates a measurement report based on the measurement value, and feeds back the measurement report based on the security verification request.

Optionally, the computer device further includes a memory chip, the processing chip includes a memory encryption module, and the operating method for a computer device further includes: The security chip generates a key by using the root of trust, and provides the key to the memory encryption module; the memory encryption module encrypts memory data by using the key, and provides encrypted memory data to the memory chip; and the memory chip stores the encrypted memory data.

Optionally, the computer device further includes a memory chip, the processing chip includes a memory encryption module, and the operating method for a computer device further includes: The security chip generates a key by using the root of trust, and provides the key to the memory encryption module; the memory chip provides the encrypted memory data to the memory encryption module; and the memory encryption module decrypts the encrypted memory data by using the key.

According to a third aspect, this application provides a security chip, and the security chip is the security chip according to any one of the first aspect and the possible implementations of the first aspect of this application.

According to a fourth aspect, this application provides a computer device, including a memory and a processor. The memory stores program instructions, and the processor runs the program instructions to perform the method provided in any one of the second aspect and the possible implementations of the second aspect of this application.

According to a fifth aspect, this application provides a computer-readable storage medium, where the computer-readable storage medium is a non-volatile computer-readable storage medium. The computer-readable storage medium includes program instructions, and when the program instructions are run on a container management device, the container management device is enabled to perform the method provided in any one of the second aspect and the possible implementations of the second aspect of this application.

According to a sixth aspect, this application provides a computer program product including instructions. When the computer program product runs on a computer, the computer is enabled to perform the method provided in any one of the second aspect and the possible implementations of the second aspect of this application.

### BRIEF DESCRIPTION OF DRAWINGS

FIG. 1 is a schematic diagram of a structure of a computer device according to an embodiment of this application;
FIG. 2 is another schematic diagram of a structure of a computer device according to an embodiment of this application;
FIG. 3 is still another schematic diagram of a structure of a computer device according to an embodiment of this application;
FIG. 4 is yet another schematic diagram of a structure of a computer device according to an embodiment of this application;
FIG. 5 is still another schematic diagram of a structure of a computer device according to an embodiment of this application;
FIG. 6 is yet another schematic diagram of a structure of a computer device according to an embodiment of this application;
FIG. 7 is still another schematic diagram of a structure of a computer device according to an embodiment of this application;
FIG. 8 is a schematic diagram of a secure boot process of a computer device according to an embodiment of this application;
FIG. 9 is a schematic diagram of a process of implementing remote attestation by a computer device according to an embodiment of this application;
FIG. 10 is a schematic diagram of a process of implementing memory encryption by a computer device according to an embodiment of this application;
FIG. 11 is yet another schematic diagram of a structure of a computer device according to an embodiment of this application;
FIG. 12 is a flowchart of an operating method for a computer device according to an embodiment of this application; and
FIG. 13A and FIG. 13B are a flowchart of another operating method for a computer device according to an embodiment of this application.

### DESCRIPTION OF EMBODIMENTS

To make the objectives, technical solutions, and advantages of this application clearer, the following further describes the implementations of this application in detail with reference to the accompanying drawings.

For ease of understanding, the following first briefly describes some terms and technologies in embodiments of this application.

Confidential computing is a technology that builds and runs a trusted execution environment isolated from an untrusted environment based on hardware and software capabilities, ensures confidentiality of the trusted execution environment, and performs computation in the trusted execution environment to protect data in use. In the international confidential computing consortium, confidential computing is defined as a technology that protects data in use by performing computation in a hardware-based trusted execution environment.

Trusted control refers to a control operation performed on a to-be-measured object based on a reliability measurement result. Therefore, the trusted control may also be referred to as control. When measurement of the to-be-measured object succeeds, an original state of the to-be-measured object may be maintained, or an operation that is expected to be performed before reliability measurement is performed on the to-be-measured object may be performed. When measurement of the to-be-measured object fails, a security measure can be taken for the to-be-measured object. For example, a computer may be controlled to be reset, or the to-be-measured object may be controlled to be rebooted, to avoid a security threat to the computer caused by a reason why the measurement fails.

Root of trust (root of trust, RoT): is a module that includes high-reliable hardware, firmware, and software and whose behavior is always predictable, and is a component that includes one or more specific security functions, such as measurement, storage, reporting, verification, or update. The root of trust is a basis for a system to ensure security and reliability. In an existing confidential computing solution, there are three types of roots of trust: a root for boot for secure boot, a root of trust for reporting for remote attestation, and a root for encryption for memory encryption

Measurement (or reliability measurement) is a process of verifying security of a measured object. A process of reliability measurement generally includes two processes: computing and verifying. Computing is to compute software code or a configuration file of a measured object according to a predetermined algorithm, for example, computing a hash value of the software code. Verifying is to compare a computing result with a pre-stored measurement baseline of the measured object. If the computing result meets the measurement baseline, it is determined that the measured object meets security, and vice versa. The measured object is an entity on which reliability measurement is performed, and an entity that performs a reliability measurement operation on the measured object is a measurement entity.

Core root of trust for measurement (core root of trust for measurement, CRTM): is executable code used to establish a root of trust for measurement, and the root of trust for measurement can be established by running the core root of trust for measurement. The core root of trust for measurement is a first segment of code executed after a trusted computing platform is powered on and booted.

A processing chip includes a trusted execution environment and a common execution environment (also referred to as a rich execution environment (rich execution environment, REE)). The trusted execution environment and the common execution environment are concepts proposed by the global platform (global platform, GP) organization. The trusted execution environment and the common execution environment are two independent execution environments that are obtained through division and that are on one mobile terminal device on the basis of original hardware and software of the mobile terminal device. The trusted execution environment has an operating system of itself, and a secure application is deployed in the trusted execution environment. The common execution environment cannot access resources in the trusted execution environment without authorization. The common execution environment and the trusted execution environment isolate device resources by sharing physical components and scheduling software in hardware for isolation running. In an implementation, the processing chip may be a processor, for example, a central processing unit (central processing unit, CPU).

With the rapid development of computer technology, data security attracts increasingly attention. In addition, with the rapid development of cloud computing in recent years, critical services and high-value data are increasingly migrated to the cloud. As computing moves from internal deployment to public clouds and edges, data protection becomes more complex. A current protection policy for data security usually applies to data that is stored statically or data that is in a network transmission state. However, when data is in use, data security is still at risk. This is also the most challenging step in data protection. Therefore, protecting the data in use is a problem to be urgently resolved.

An important technical advance in the security field is called confidential computing. Confidential computing can protect security of data in use and is widely used, especially in the cloud computing field. Common applications include Enclave-based encrypted data analysis, copyright protection, gene data processing, key protection, key management system, privacy protection machine learning, and confidential database. Other applications, such as block chain privacy computing, block chain, trusted artificial intelligence (artificial intelligence, AI), and privacy edge computing, can be built on the basis of confidential computing technologies to better serve application scenarios. The confidential computing technology is an innovative data isolation and encryption technology, and can ensure security of sensitive data and code at a hardware layer of a server chip even if OS kernel, Hypervisor, BIOS, and other privilege software have been damaged even by malicious behavior. This ensures confidentiality and integrity of important application data and code and provides an easy-to-use, secure, and clustered trusted computing environment for critical services. Because the computing process is performed in the trusted execution environment, data in the computing process can be protected. Confidential computing can protect security of the data in use, and a key point of confidential computing is to rely on a trust chain of the trusted execution environment, and the trust chain needs to be constructed based on a root of trust in a processing chip that performs computation.

However, in a current solution for implementing confidential computing, the trust chain of the trusted execution environment is constructed based on the root of trust internally disposed in the processing chip. In this way, a trust degree of the root of trust is subject to a trust degree of a vendor of the processing chip. As a result, a trust degree of confidential computing is also affected by the trust degree of the vendor of the processing chip. In addition, in this way, the existing confidential computing solution is usually strongly bound to the vendor of the processing chip, and is difficult to be compatible with each other. Consequently, in some technical solutions, application development in the trusted execution environment for confidential computing can be performed only after being approved and authenticated by the vendor of the processing chip. This restricts use of chips from different vendors in a system or cluster and restricts the development of large-scale confidential computing.

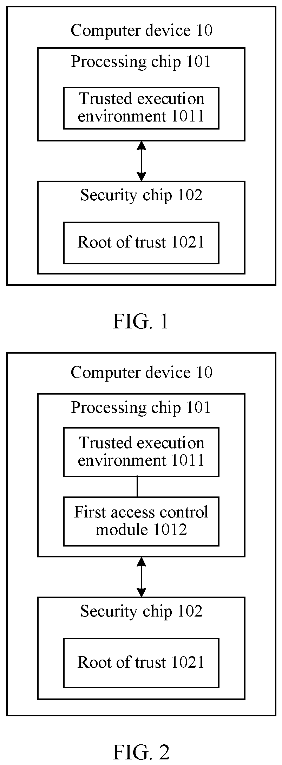

An embodiment of this application provides a computer device. FIG. 1 is a schematic diagram of a computer device 10 according to an embodiment of this application. As shown in FIG. 1, the computer device 10 includes a processing chip 101 and a security chip 102. The security chip 102 is configured to: operate a root of trust 1021, boot the processing chip 101 based on the root of trust 1021, and perform trusted control on the processing chip 101. The processing chip 101 includes a trusted execution environment 1011, the trusted execution environment 1011 is constructed based on the root of trust 1021, and the trusted execution environment 1011 is configured to perform confidential computing. Because the trusted execution environment 1011 needs to use a trust chain, and the trust chain is constructed based on the root of trust 1021, it may be considered that the trusted execution environment 1011 is constructed based on the root of trust 1021.

In the computer device 10, the security chip 102 and the processing chip 101 are separately disposed, to implement decoupling between the security chip 102 and the processing chip 101. Security of the security chip 102 may be ensured and endorsed by a vendor of the security chip 102. In this way, a trust degree of the root of trust 1021 in the security chip 102 is no longer subject to a trust degree of a vendor of the processing chip 101, and a current situation in which construction of the trusted execution environment 1011 is limited to the vendor of the processing chip 101 is eliminated, thereby improving a trust degree of confidential computing, and eliminating distrust of a user on the vendor of the processing chip 101. Because the security chip 102 is decoupled from the processing chip 101, the security chip 102 can be connected to different types of processing chips 101, and compatibility of the entire computer device 10 with a plurality of chips is improved. This helps promote development of a large-scale confidential computing application scenario and promote a standardization process of a confidential computing security ecosystem.

After the root of trust 1021 is placed outside the processing chip 101, a key problem is how to continue to ensure that the root of trust 1021 itself and communication between the root of trust 1021 and the processing chip 101 are secure and reliable. Therefore, in this embodiment of this application, some security assurance mechanisms are further provided while the root of trust 1021 is externally deployed. In a possible implementation, an access control mechanism and/or a communication protection mechanism may be set in the computer device 10, to ensure security and reliability of the root of trust 1021 and ensure security and reliability of communication between the security chip and the processing chip 101. The following separately describes the access control mechanism and the communication protection mechanism.

In this embodiment of this application, an implementation principle of the access control mechanism is as follows: After an access request for the root of trust 1021 is received, authentication is performed on the access request, and access is allowed when the access request has access permission, or access is rejected when the access request does not have access permission. Optionally, the access control mechanism may be implemented in the processing chip 101, may be implemented in the security chip 102, or may be implemented through cooperation between the processing chip 101 and the security chip 102. The following separately describes implementation processes of the three implementation cases.

In a first implementation case, the access control mechanism is implemented in the processing chip 101. As shown in FIG. 2, in an implementation, the processing chip 101 includes a first access control module 1012. The first access control module 1012 is configured to: receive an access request for the root of trust 1021, and forward the access request to the security chip 102 when the access request has access permission, or reject the access request when the access request does not have access permission. In this case, because the access request forwarded by the first access control module 1012 to the security chip 102 has the access permission, the security chip 102 is further configured to receive the access request and respond to the access request.

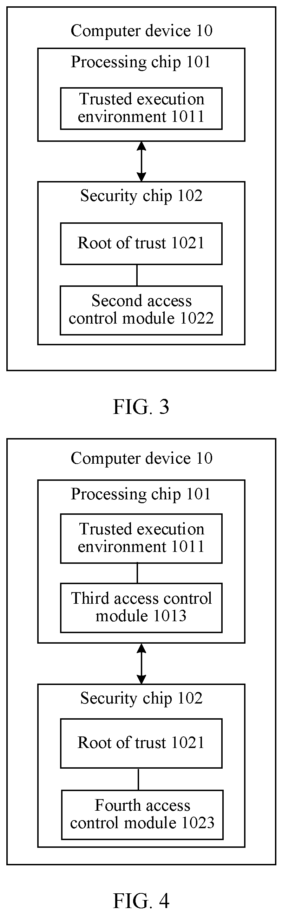

In a second implementation case, the access control mechanism is implemented in the security chip 102. As shown in FIG. 3, in an implementation, the security chip 102 includes a second access control module 1022. The second access control module 1022 is configured to: receive an access request for the root of trust 1021, and respond to the access request when the access request has access permission, or reject the access request when the access request does not have access permission. The access request received by the security chip 102 may be sent by the processing chip 101.

In a third implementation case, the access control mechanism is implemented through cooperation between the processing chip 101 and the security chip 102. As shown in FIG. 4, in an implementation, the processing chip 101 includes a third access control module 1013, and the security chip 102 includes a fourth access control module 1023. The third access control module 1013 is configured to: receive an access request for the root of trust 1021, obtain permission indication information of the access request, and forward the access request and the permission indication information of the access request to the security chip 102. The fourth access control module 1023 is configured to receive an access request and access permission of the access request, respond to the access request when the permission indication information indicates that the access request has access permission, or reject the access request when the permission indication information indicates that the access request does not have access permission.

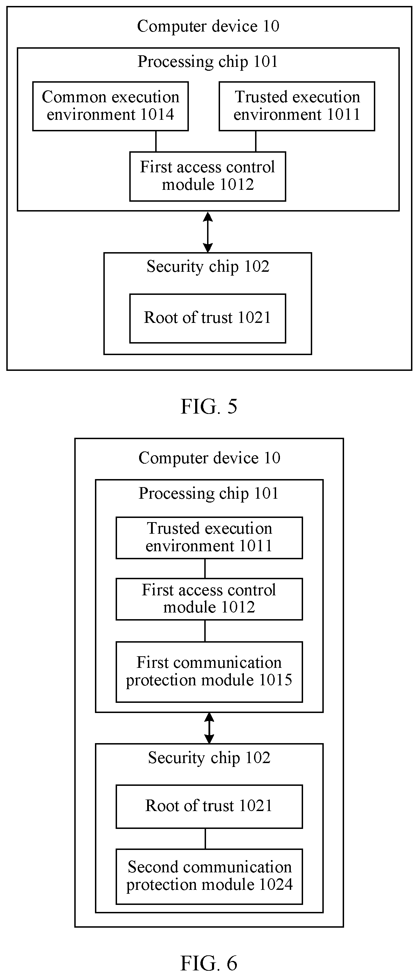

The root of trust 1021 is a root of trust 1021 of the trusted execution environment 1011. For the root of trust 1021, the trusted execution environment 1011 has a high security level, and the root of trust 1021 can be accessed by the trusted execution environment 1011. Therefore, an access request from the trusted execution environment 1011 has access permission, and an access request from outside the trusted execution environment 1011 does not have the access permission. For example, the access control mechanism is implemented by using the processing chip 101. As shown in FIG. 5, when the computer device 10 includes the trusted execution environment 1011 and a common execution environment 1014, because the root of trust 1021, used as the root of trust 1021 of the trusted execution environment 1011, can be accessed only by the trusted execution environment 1011 whose security level is high, and any access request from the common execution environment 1014, including access from an administrator level in the common execution environment 1014, should not have access permission to the root of trust 1021, all access requests from the trusted execution environment 1011 have access permission, and all access requests from the common execution environment 1014 do not have the access permission.

The access request is authenticated by using the access control mechanism, so that it can be ensured that access from the trusted execution environment 1011 is valid, and access from outside the trusted execution environment 1011 is shielded, so that security and reliability of the root of trust 1021 can be ensured. This is particularly obvious when the computer device 10 is deployed on the cloud. When the computer device 10 is deployed on the cloud, the computer device 10 is usually managed by a cloud administrator. Generally, the cloud administrator has a high permission, but it is not excluded that the cloud administrator may cause insecurity of the root of trust 1021. In this embodiment of this application, an access request from the cloud administrator may be considered as the access request from the common execution environment 1014, and access to the root of trust 1021 by the cloud administrator can be rejected by using the access control mechanism. Therefore, security and reliability of the root of trust 1021 can be effectively ensured.

In a possible implementation, when the access control mechanism is implemented, the access permission may be carried in the access request, or may not be carried in the access request. When the access permission is carried in the access request, the access permission may be determined by a sender of the access request. For example, access permission may be preset for each component (such as a computing resource, a memory area, and a peripheral) in the computer device 10. When any component needs to send an access request, the access permission set for the component may be first read, and the access permission is carried in the access request for sending. When the access request is not carried in the access request, access permission may be preset for each component in the computer device 10, and any component may send the access permission of the component to a component whose access request needs to be authenticated. Alternatively, when the access request is not carried in the access request, access permission of all components may be recorded in specified locations of the computer device 10. When the access permission of the access request needs to be obtained, the access permission of the access request may be obtained from the specified location based on a transmit end of the access request.

In addition, the access permission may also be represented by using a permission identifier, and different values assigned to the permission identifier indicate different access permission. For example, when a value assigned to the permission identifier is 0, it may be determined that there is access permission to the root of trust 1021, and when a value assigned to the permission identifier is 1, it may be determined that there is no access permission to the root of trust 1021.

The following describes the communication protection mechanism. In this embodiment of this application, the communication protection mechanism may be implemented through cooperation between the processing chip 101 and the security chip 102. In an implementation, as shown in FIG. 6, the processing chip 101 includes a first communication protection module 1015, and the security chip 102 includes a second communication protection module 1024. The second communication protection module 1024 matches the first communication protection module 1015. The first communication protection module 1015 and the second communication protection module 1024 are configured to protect communication between the security chip 102 and the processing chip 101. For example, the first communication protection module performs a first communication protection measure on content of communication between the security chip and the processing chip, and the second communication protection module performs a second communication protection measure on content of communication between the security chip and the processing chip, where the second communication protection measure matches the first communication protection measure. Alternatively, the second communication protection module performs a first communication protection measure on content of communication between the security chip and the processing chip, and the first communication protection module performs a second communication protection measure on content of communication between the security chip and the processing chip, where the second communication protection measure matches the first communication protection measure. The matching between the first communication protection module 1015 and the second communication protection module 1024 indicates that the first communication protection module 1015 and the second communication protection module 1024 can protect communication between the processing chip 101 and the security chip 102 according to a pre-negotiated encrypted communication protocol.

When the communication protection mechanism is implemented, one or more policies may be used between the first communication protection module 1015 and the second communication protection module 1024 to ensure security of communication between the security chip 102 and the processing chip 101. In an implementation, the first communication protection module 1015 and the second communication protection module 1024 may protect communication between the security chip 102 and the processing chip 101 according to a key policy, to ensure confidentiality of communication between the security chip 102 and the processing chip 101. That is, when the security chip 102 communicates with the processing chip 101, one of the first communication protection module 1015 and the second communication protection module 1024 may encrypt the communication content by using an encryption key, and the other of the first communication protection module 1015 and the second communication protection module 1024 may decrypt the communication content by using a decryption key that matches the encryption key, to ensure security of the communication content in a communication process.

Optionally, the first communication protection module 1015 and the second communication protection module 1024 may protect communication between the security chip 102 and the processing chip 101 according to at least one of a signature policy and a timestamp policy, to ensure integrity of communication between the security chip 102 and the processing chip 101, and prevent content of communication between the security chip 102 and the processing chip 101 from being forged and tampered with.

When the signature policy is used, one of the first communication protection module 1015 and the second communication protection module 1024 may sign the communication content in some manners, and the other of the first communication protection module 1015 and the second communication protection module 1024 may verify the signature, and when the verification succeeds, determine that the communication content is not forged or tampered with. For example, when the processing chip 101 sends data to the security chip 102, the first communication protection module 1015 may perform a hash operation on to-be-sent data according to a hash (Hash) algorithm, and then encrypt a hash result by using an asymmetric private key to generate a signature. The second communication protection module 1024 may verify the signature by using a corresponding public key.

When the timestamp policy is used, one of the first communication protection module 1015 and the second communication protection module 1024 may add a timestamp to the communication content in some manners, and the other of the first communication protection module 1015 and the second communication protection module 1024 may verify validity of the timestamp, and when verifying that the timestamp is valid, determine that the communication content is not forged or tampered with.

In an implementation, the first communication protection module 1015 and the second communication protection module 1024 may implement the communication protection mechanism by using a transport layer security protocol (transport layer security, TLS) or a secure sockets layer (secure sockets layer, SSL) security protocol.

In this embodiment of this application, the root of trust 1021 includes one or more of the following: a root for boot 1021a, a root for measurement 1021b (also referred to as a root of trust for reporting), and a root for encryption 1021c (also referred to as a root of trust for storage). The root for boot 1021a is used to securely boot the processing chip 101. The root for measurement 1021b is used to prove to a remote user that an operating state of the computer device 10 is secure and reliable, that is, implement remote attestation. The root for encryption 1021c is used to encrypt memory space of the trusted execution environment 1011, to ensure that no plaintext leakage occurs in a memory.

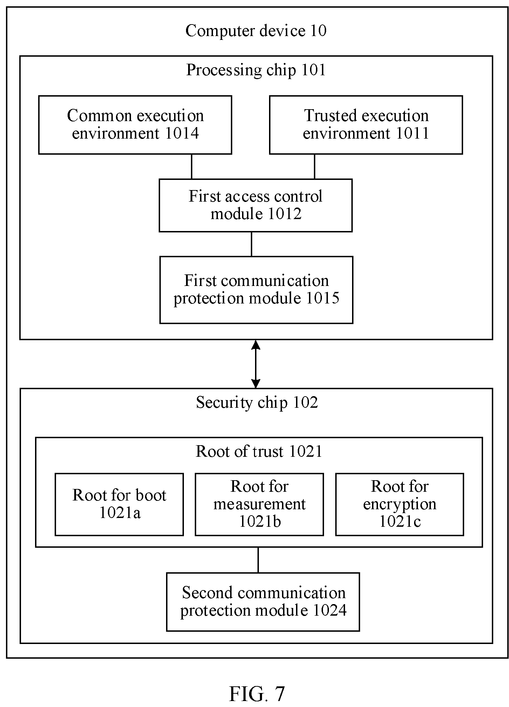

For example, as shown in FIG. 7, the root for boot 1021a, the root for measurement 1021b, and the root for encryption 1021c all operate in the security chip 102, and the security chip 102 is disposed outside the processing chip 101. In this way, the root for boot 1021a, the root for measurement 1021b, and the root for encryption 1021c are all disposed outside the processing chip 101, so that security of the root for boot 1021a, the root for measurement 1021b, and the root for encryption 1021c can be ensured and endorsed by a vendor of the security chip 102, and is no longer limited to a vendor of the processing chip 101. In addition, although FIG. 7 is described by using an example in which the root for boot 1021a, the root for measurement 1021b, and the root for encryption 1021c all operate in the security chip 102, some of the root for boot 1021a, the root for measurement 1021b, and the root for encryption 1021c may also operate outside the security chip 102 (for example, in the processing chip 101). For example, the root for boot 1021a and the root for measurement 1021b may operate in the security chip 102, and the root for encryption 1021c may operate in the processing chip 101. A person of ordinary skill in the art may learn that, as a service requirement changes, a deployment manner of the root for boot 1021a, the root for measurement 1021b, and the root for encryption 1021c may be adjusted according to the service requirement. This is not specifically limited in this embodiment of this application.

The following separately describes implementation processes of the root for boot 1021a, the root for measurement 1021b, and the root for encryption 1021c.

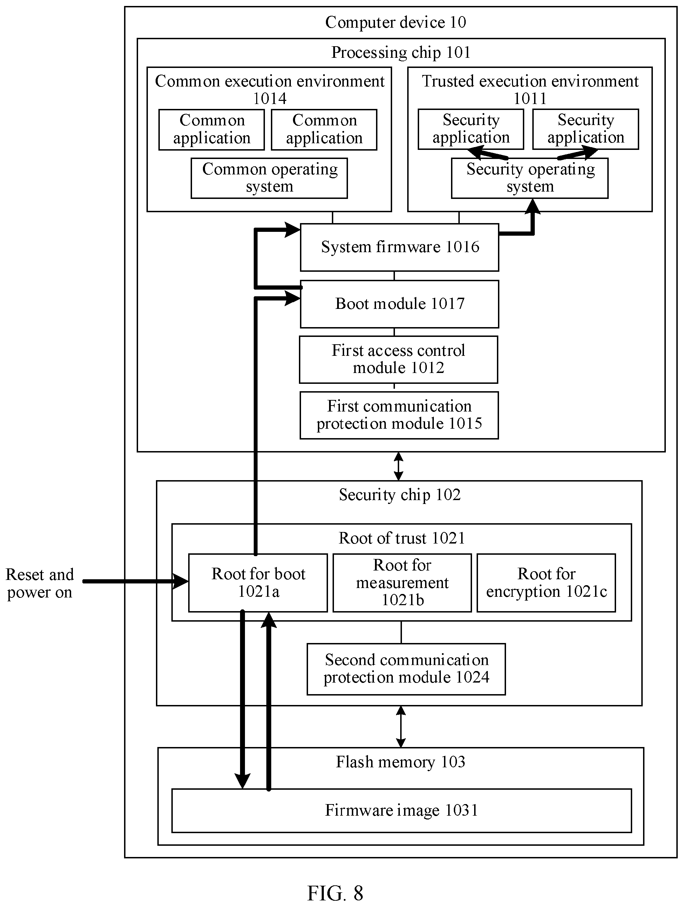

In a process of securely booting the processing chip 101 by using the root for boot 1021a, the security chip 102 is specifically configured to: after being powered on, obtain, by using the root for boot 1021a, a firmware image used to boot the processing chip 101, and boot the processing chip 101 by using the firmware image. In an implementation, as shown in FIG. 8, in a power-on process of the computer device 10, the security chip 102 is first reset and powered on, and then the security chip 102 constructs the root of trust 1021 by operating a core root for measurement. Then, a firmware image 1031 of a latest version is verified by using the root for boot 1021a. When the firmware image 1031 of the latest version passes the verification, it is determined to use the firmware image 1031 of the latest version to boot the processing chip 101. When the firmware image 1031 of the latest version does not pass the verification, it is determined that a backup firmware image 1031 of the earlier version is used to boot the processing chip 101, to ensure that the computer device 10 can be booted. Then, a system of the computer device 10 including the processing chip 101 is powered on, and the processing chip 101 is booted by using the determined firmware image. For example, a system firmware 1016 is securely booted, then integrity of software (for example, an operating system (TEE OS, also referred to as a secure operating system) of the trusted execution environment 1011, an operating system LibOS (also referred to as a common operating system, such as a Linux kernel) of the common execution environment 1014, and a virtual machine operating system) of the computer device 10 is verified, and trusted system software is loaded after ensuring, through verification, that the software is not tampered with, to boot the entire computer device 10. The core root for measurement is a first line of code that is run after the security chip 102 is powered on, and may be stored in a read-only memory (read-only memory, ROM) of the security chip 102. The firmware image 1031 may be stored in a flash memory (Flash) 103 of the computer device 10. The verifying the firmware image is mainly to verify integrity of the firmware image, to ensure that a confidential computing firmware is not tampered with, and load a trusted firmware after determining that the confidential computing firmware is not tampered with. The firmware may be the confidential computing firmware, for example, a basic input/output system (base input/output system, BIOS), a boot loader (Bootloader), or an ATF. In addition, a secure application is deployed in the trusted execution environment 1011, and in the secure boot process, the secure boot should be extended to integrity of each secure application. Each time one secure application (for example, a user workload) is loaded, the computer device 10 further needs to verify the secure application, and load a trusted secure application after ensuring that the secure application is not tampered with. In addition, an operation of booting the processing chip 101 by using the determined firmware image may be performed by a boot module 1017 in the processing chip 101. Directions of black bold arrows shown in FIG. 8 indicate a sequence of booting components in the secure boot process.

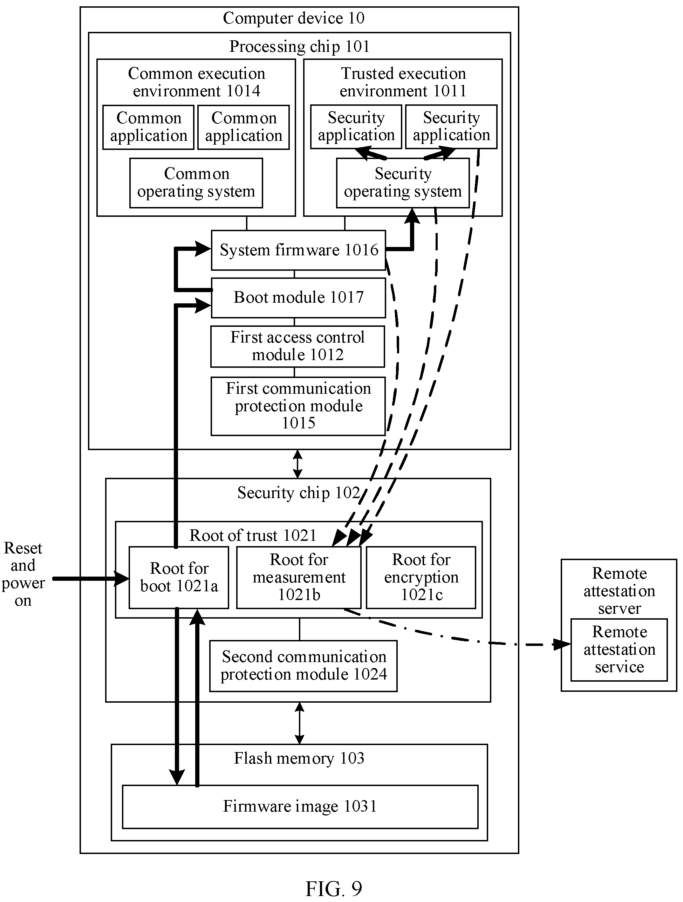

An implementation of implementing remote attestation by the root for measurement 1021b includes: The security chip 102 receives a measurement value generated by the processing chip 101 in a boot process, when receiving a security verification request for the trusted execution environment 1011, generate a measurement report based on the measurement value, and feed back the measurement report based on the security verification request. In an implementation, as shown in FIG. 9, in a process of securely booting the processing chip 101 by using the root of trust 1021, after security of firmware or software at a specific level is confirmed, a measurement value of the firmware or software is generated, and the measurement value is sent to the security chip 102 (a dashed line arrow in FIG. 9 is a sending direction of the measurement value). The security chip 102 may store a measurement value generated in each phase of the boot process. In a subsequent operating process of the computer device 10, a remote user may verify, in a cryptology challenge manner, the measurement value stored in the root of trust 1021 at any time, to confirm that an operating state of the computer device 10 is secure and reliable. In this case, the remote attestation process is triggered. In this process, the root for measurement 1021b is used as a root of trust for reporting of the computer device 10, and a measurement report used for a remote challenge may be generated based on a stored measurement value, and the measurement report is provided to a remote attestation server (in FIG. 9, a dotted line arrow is a sending direction of the measurement report). The remote server may verify the measurement report to ensure security of the trusted execution environment 1011.

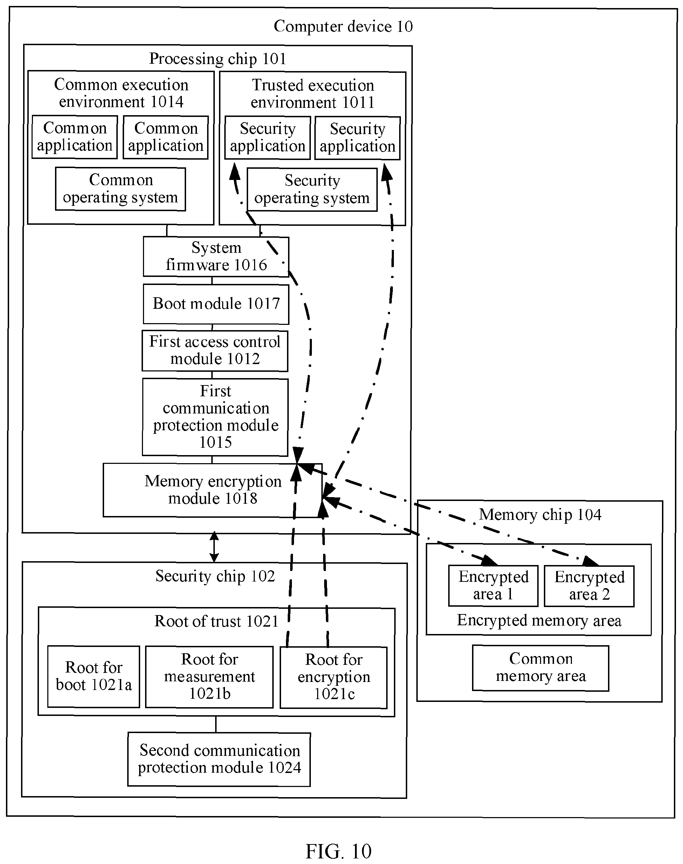

When memory space of the trusted execution environment 1011 is encrypted, as shown in FIG. 10, the computer device 10 further includes a memory chip 104, and the processing chip 101 includes a memory encryption module 1018. In this case, the security chip 102 is further configured to generate a key by using the root of trust 1021, and provide the key to the memory encryption module 1018 through an encryption channel. The memory encryption module 1018 is configured to: encrypt memory data by using the key, provide encrypted memory data to the memory chip 104 and/or obtain encrypted memory data from the memory chip 104, and decrypt the encrypted memory data by using the key. After decrypting the memory data, the memory encryption module 1018 may provide the decrypted memory data to the trusted execution environment 1011, so that confidential computing is performed based on the data in the trusted execution environment 1011. Correspondingly, the memory chip 104 is configured to receive and store the encrypted memory data and/or provide the encrypted memory data to the memory encryption module 1018. In this way, it can be ensured that the data remains in a ciphertext state after leaving the processing chip 101.

When the root of trust 1021 includes the root for encryption 1021c, the key is generated by the root for encryption 1021c. In an implementation, the memory encryption module may be a memory encryption engine (memory encryption engine, MEE), and is configured to perform a hardware encryption or decryption operation on memory space that needs to be encrypted For example, as shown in FIG. 10, the memory chip 104 may include an encrypted memory area and a common memory area, and the encrypted memory area is memory space that needs to be encrypted. In addition, one or more secure applications may be usually deployed in the trusted execution environment 1011, and each secure application may correspond to an encrypted area in the encrypted memory area. When a plurality of secure applications are deployed in the trusted execution environment 1011, the root for encryption 1021c may generate different keys for different secure applications, and the memory encryption module may perform, by using a key of the secure application itself, an encryption or decryption operation on data used by the secure application itself, to ensure security of data used by each secure application. In FIG. 10, a dashed line arrow represents a transfer direction of a key, and a dotted line arrow represents a transfer direction of data.

It can be learned from the foregoing that, in the computer device 10 provided in this embodiment of this application, the security chip 102 and the processing chip 101 are separately disposed, to implement decoupling between the security chip 102 and the processing chip 101. Security of the security chip 102 may be ensured and endorsed by a vendor of the security chip 102. In this way, a trust degree of the root of trust 1021 in the security chip 102 is no longer subject to a trust degree of a vendor of the processing chip 101, and a current situation in which construction of the trusted execution environment 1011 is limited to the vendor of the processing chip 101 is eliminated, thereby improving a trust degree of confidential computing, and eliminating distrust of a user on the vendor of the processing chip 101. Because the security chip 102 is decoupled from the processing chip 101, the security chip 102 can be connected to different types of processing chips 101, and compatibility of the entire computer device 10 with a plurality of chips is improved. This helps promote development of a large-scale confidential computing application scenario and promote a standardization process of a confidential computing security ecosystem.

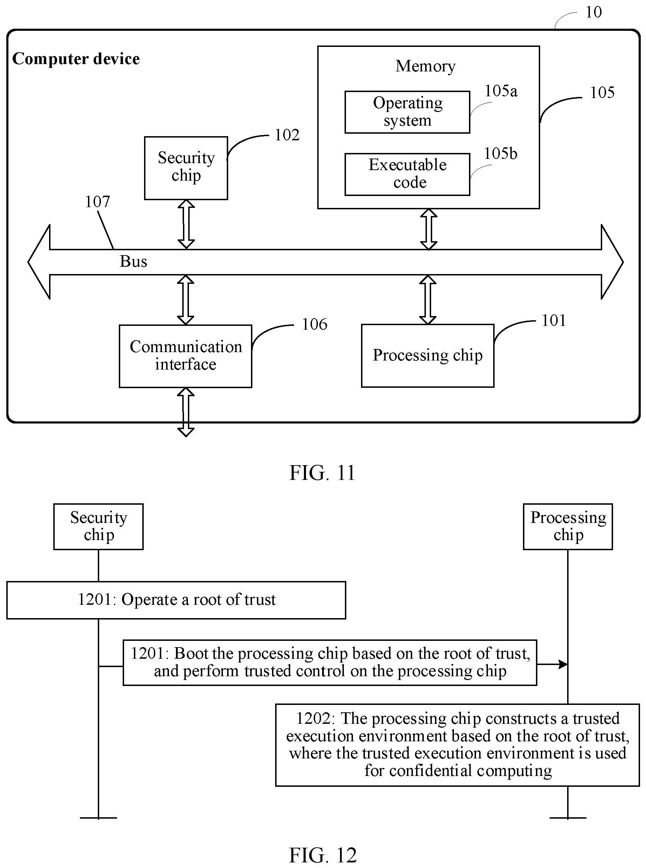

FIG. 11 is another schematic diagram of a computer device 10 according to an embodiment of this application. As shown in FIG. 11, the computer device 10 may further include a memory 105, a communication interface 106, and a bus 107. The processing chip 101, the security chip 102, the memory 105, and the communication interface 106 implement mutual communication connections through the bus 107.

The processing chip 101 may include a general-purpose processing chip 101 and/or a dedicated hardware chip. The general-purpose processing chip 101 may include a central processing unit (central processing unit, CPU), a microprocessor, or a graphics processing unit (graphics processing unit, GPU). A CPU, for example, is a single-core processor (single-CPU), or a multicore processor (multi-CPU). The dedicated hardware chip is a high-performance processing hardware module. The dedicated hardware chip includes at least one of a digital signal processor, an application-specific integrated circuit (application-specific integrated circuit, ASIC), a field programmable gate array (field programmable gate array, FPGA), or a network processor (network processor, NP). Alternatively, the processing chip 101 may be an integrated circuit chip, and has a signal processing capability. In an implementation process, some or all functions implemented by the processing chip 101 in this application may be implemented by using an integrated logic circuit of hardware in the processing chip 101 or an instruction in a form of software.

The memory 105 is configured to store a computer program, and the computer program includes an operating system 105a and executable code (that is, a program instruction) 105b. The memory 105 is, for example, a read-only memory or another type of static storage device that can store static information and instructions, or a random access memory or another type of dynamic storage device that can store information and instructions. The memory 105 may alternatively be an electrically erasable programmable read-only memory, a compact disc read-only memory or another compact disc storage, an optical disc storage (including a compact disc, a laser disc, an optical disc, a digital versatile disc, a Blu-ray disc, or the like), a magnetic disk storage medium or another magnetic storage device, or any other medium that can be for carrying or storing expected executable code in a form of an instruction or a data structure and that can be accessed by a computer. However, the memory 105 is not limited thereto. For example, the memory 105 is configured to store an egress port queue and the like. The memory 105, for example, exists independently, and is connected to the processing chip 101 through the bus 107. Alternatively, the memory 105 and the processing chip 101 are integrated together. The memory 105 may store executable code. When the executable code stored in the memory 105 is executed by the processing chip 101, the processing chip 101 is configured to implement some or all functions implemented by the processing chip 101 in this application. For example, the processing chip 101 performs confidential computing. The memory 105 may further include another software module, such as an operating system, or data for running a process.

For the communication interface 106, a transceiver module is used to implement communication between the communication interface and another device or communication network. The transceiver module is, for example, but is not limited to, a transceiver. For example, the communication interface 106 may be any one or any combination of the following components: a component having a network access function, such as a network interface (for example, an Ethernet interface) or a wireless network adapter.

The bus 107 is any type of communication bus configured to implement interconnection between internal components (for example, the memory 105, the processing chip 101, and the communication interface 106) of the computer device 10, for example, a system bus. In this embodiment of this application, an example in which the foregoing components in the computer device 10 are interconnected through the bus 107 is used for description. Optionally, the foregoing components in the computer device 10 may also be communicatively connected to each other in another connection manner other than the bus 107. For example, the foregoing components in the computer device 10 are interconnected through an internal logical interface.

Optionally, according to an application requirement, the computer device 10 may further include a flash memory 103, a memory chip 104, and the like.

It should be noted that the foregoing plurality of components may be separately disposed on chips independent of each other, or at least some or all of the components may be disposed on a same chip. Whether the components are separately disposed on different chips or integrated and disposed on one or more chips usually depends on a requirement of a product design. This embodiment of this application imposes no limitation on specific implementations of the foregoing components. The descriptions of the procedures corresponding to the foregoing accompanying drawings have respective focuses. For a part that is not described in detail in a procedure, refer to related descriptions of another procedure.

In the foregoing embodiments, all or some functions implemented by the components of the computer device may be implemented by using software, hardware, firmware, or any combination thereof. When software is used to implement embodiments, all or some of embodiments may be implemented in a form of a computer program product. A computer program product that provides a program development platform includes one or more computer instructions. When the computer program instructions are loaded and executed on the computer device 10, all or some functions of components of the computer device provided in embodiments of this application are implemented, for example, functions of a processing chip or functions of a security chip are implemented.

In addition, the computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium stores computer program instructions that provide the program development platform.

It should be understood that the foregoing structure of the computer device is an example description of the structure of the computer device provided in this embodiment of this application, and does not constitute a limitation on the structure of the computer device. A person of ordinary skill in the art may learn that, as a service requirement changes, the structure of the computer device may be adjusted according to the application requirement, and is not enumerated in this embodiment of this application.

An embodiment of this application further provides an operating method for a computer device. The computer device includes a processing chip and a security chip. In an implementation, the computer device may be the computer device provided in the foregoing embodiment. For example, the computer device may be the computer device shown in any one of FIG. 1 to FIG. 11. As shown in FIG. 12, the operating method for a computer device includes the following steps.

Step 1201: The security chip operates a root of trust, boots the processing chip based on the root of trust, and performs trusted control on the processing chip.

In a possible implementation, the root of trust includes one or more of the following: a root for boot, a root for measurement, and a root for encryption

Optionally, an implementation process in which the security chip boots the processing chip based on the root of trust includes: The security chip obtains, by using the root of trust, a firmware image used to boot the processing chip; and after the processing chip is powered on, the security chip boots the processing chip by using the firmware image.

Step 1202: The processing chip constructs a trusted execution environment based on the root of trust, where the trusted execution environment is used for confidential computing.

After the root of trust is placed outside the processing chip, a key problem is how to continue to ensure that the root of trust itself and communication between the root of trust and the processing chip are secure and reliable. Therefore, in this embodiment of this application, some security assurance mechanisms are further provided while the root of trust is externally deployed. In a possible implementation, an access control mechanism and/or a communication protection mechanism may be set in the computer device, to ensure security and reliability of the root of trust and ensure security and reliability of communication between the security chip and the processing chip. The following separately describes the access control mechanism and the communication protection mechanism.

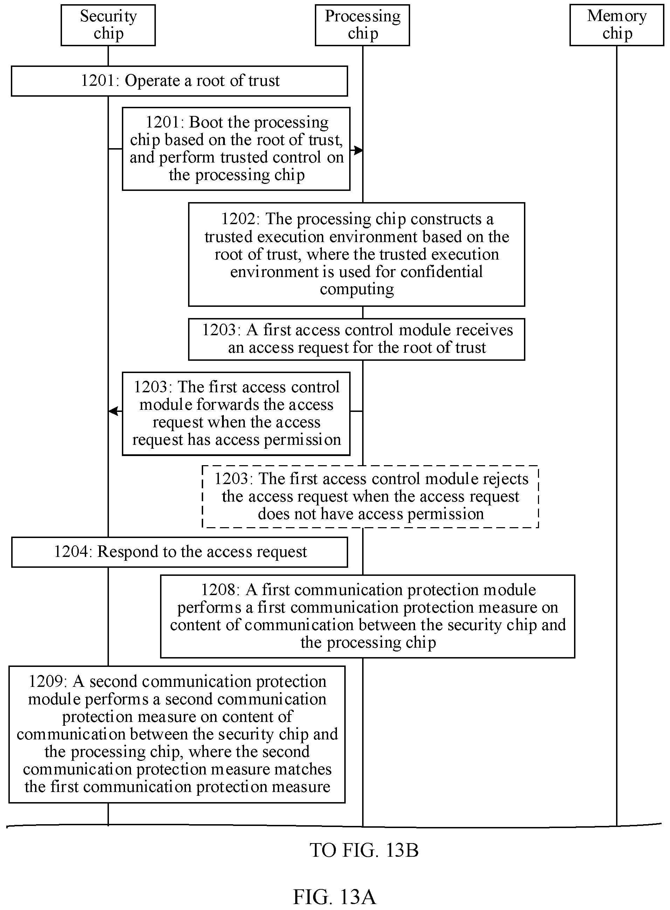

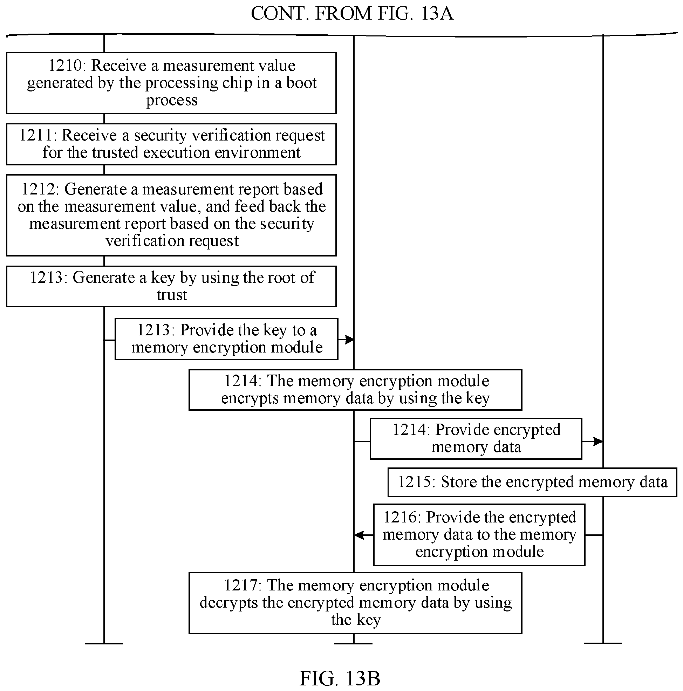

In an implementation of the access control mechanism, the processing chip includes a first access control module. As shown in FIG. 13A and FIG. 13B, the operating method for a computer device may further include the following steps.

Step 1203: The first access control module receives an access request for the root of trust, and forwards the access request to the security chip when the access request has access permission, or rejects the access request when the access request does not have access permission.

Step 1204: The security chip responds to the access request.

In another implementation of the access control mechanism, the security chip includes a second access control module. The operating method for a computer device may further include the following step.

Step 1205: The second access control module receives an access request for the root of trust, and responds to the access request when the access request has access permission, or rejects the access request when the access request does not have access permission.

In yet another implementation of the access control mechanism, the processing chip includes a third access control module, and the security chip includes a fourth access control module. The operating method for a computer device may further include the following steps.

Step 1206: The third access control module receives an access request for the root of trust, obtains permission indication information of the access request, and forwards the access request and the permission indication information of the access request to the security chip.

Step 1207: The fourth access control module responds to the access request when the permission indication information indicates that the access request has access permission, and rejects the access request when the permission indication information indicates that the access request does not have the access permission.

An access request from the trusted execution environment has access permission, and an access request from an outside of the trusted execution environment does not have access permission.

In an implementable of the communication protection mechanism, the processing chip includes a first communication protection module, the security chip includes a second communication protection module, and the second communication protection module matches the first communication protection module. In this case, the operating method for a computer device further includes: The first communication protection module and the second communication protection module jointly protect communication between the security chip and the processing chip. For example, as shown in FIG. 13A and FIG. 13B, the operating method for a computer device further includes the following steps. Step 1208: The first communication protection module performs a first communication protection measure on content of communication between the security chip and the processing chip. Step 1209: The second communication protection module performs a second communication protection measure on content of communication between the security chip and the processing chip, where the second communication protection measure matches the first communication protection measure. Alternatively, the operating method for a computer device further includes: The second communication protection module performs a first communication protection measure on content of communication between the security chip and the processing chip, and the first communication protection module performs a second communication protection measure on content of communication between the security chip and the processing chip, where the second communication protection measure matches the first communication protection measure.

Optionally, both the first communication protection module and the second communication protection module protect communication between the security chip and the processing chip according to a key policy. In this case, in an example, the first communication protection measure may be encryption, and the second communication protection measure may be decryption.

In addition, both the first communication protection module and the second communication protection module protect communication between the security chip and the processing chip according to at least one of a signature policy and a timestamp policy. In this case, in an example, the first communication protection measure may be a signature and timestamp addition, and the second communication protection measure may be signature verification and timestamp.

It should be noted that the communication protection mechanism may be used in combination with the access control mechanism, and the communication protection mechanism may be used in combination with any implementation of the access control mechanism. FIG. 13A and FIG. 13B are a schematic diagram of using a communication protection mechanism in combination with a first implementation of an access control mechanism.

Optionally, the operating method for a computer device may further include a remote attestation process. As shown in FIG. 13A and FIG. 13B, the operating method for a computer device may further include the following steps.

Step 1210: The security chip receives a measurement value generated by the processing chip in a boot process.

Step 1211: The security chip receives a security verification request for the trusted execution environment.

Step 1212: The security chip generates a measurement report based on the measurement value, and feeds back the measurement report based on the security verification request.

Optionally, the computer device further includes a memory chip. The processing chip includes a memory encryption module. The operating method for a computer device may further include a memory encryption and decryption process. As shown in FIG. 13A and FIG. 13B, the operating method for a computer device may further include the following memory encryption process.

Step 1213: The security chip generates a key by using the root of trust, and provides the key to the memory encryption module.

Step 1214: The memory encryption module encrypts memory data by using the key, and provides encrypted memory data to the memory chip.

Step 1215: The memory chip stores the encrypted memory data.

As shown in FIG. 13A and FIG. 13B, the operating method for a computer device may further include the following memory decryption process.

Step 1213: The security chip generates a key by using the root of trust, and provides the key to the memory encryption module.

Step 1216: The memory chip provides the encrypted memory data to the memory encryption module.

Step 1217: The memory encryption module decrypts the encrypted memory data by using the key.

It may be clearly understood by a person skilled in the art that, for the purpose of convenient and brief description, for a detailed working process of the foregoing described operating method for a computer device, refer to corresponding content in the foregoing embodiments. Details are not described herein again.

In conclusion, in the operating method for a computer device provided in this embodiment of this application, the security chip and the processing chip are separately disposed, to implement decoupling between the security chip and the processing chip. Security of the security chip may be ensured and endorsed by a vendor of the security chip. In this way, a trust degree of the root of trust in the security chip is no longer subject to a trust degree of a vendor of the processing chip, and a current situation in which construction of the trusted execution environment is limited to the vendor of the processing chip is eliminated, thereby improving a trust degree of confidential computing, and eliminating distrust of a user on the vendor of the processing chip. Because the security chip is decoupled from the processing chip, the security chip can be connected to different types of processing chips, and compatibility of the entire computer device with a plurality of chips is improved. This helps promote development of a large-scale confidential computing application scenario and promote a standardization process of a confidential computing security ecosystem.

An embodiment of this application further provides a security chip. The security chip is configured to: operate a root of trust, boot a processing chip based on the root of trust, and perform trusted control on the processing chip.

In an implementation, the security chip is specifically configured to: obtain, by using the root of trust, a firmware image used to boot the processing chip, and after the processing chip is powered on, boot the processing chip by using the firmware image.

Optionally, the root of trust includes one or more of the following: a root for boot, a root for measurement, and a root for encryption.

Optionally, the security chip is further configured to respond to an access request.

In an implementation, a computer device may include a security chip and a processing chip. The processing chip is configured to: receive an access request for the root of trust, and forward the access request to the security chip when the access request has access permission, or reject the access request when the access request does not have access permission. In this case, if the access request received by the security chip is the access request with the access permission, the security chip may respond to the access request.

In another implementation, the security chip includes a second access control module. The second access control module is configured to: receive an access request for the root of trust, and respond to the access request when the access request has access permission, or reject the access request when the access request does not have access permission.

In yet another implementation, the processing chip includes a third access control module, and the security chip includes a fourth access control module. The third access control module is configured to: receive an access request for the root of trust, obtain permission indication information of the access request, and forward the access request and the permission indication information of the access request to the security chip. The fourth access control module is configured to: respond to the access request when the permission indication information indicates that the access request has access permission, or reject the access request when the permission indication information indicates that the access request does not have access permission.

An access request from the trusted execution environment has access permission, and an access request from an outside of the trusted execution environment does not have access permission.

Optionally, the security chip may further execute a communication protection mechanism, to protect content of communication of the security chip. In an implementation, the processing chip includes a first communication protection module, the security chip includes a second communication protection module, the second communication protection module matches the first communication protection module, and the first communication protection module and the second communication protection module are configured to jointly protect communication between the security chip and the processing chip.

In an implementation, the first communication protection module and the second communication protection module are specifically configured to protect communication between the security chip and the processing chip according to a key policy.

Further, the first communication protection module and the second communication protection module are further specifically configured to protect communication between the security chip and the processing chip according to at least one of a signature policy and a timestamp policy.

Optionally, the security chip is further configured to: receive a measurement value generated by the processing chip in a boot process, receive a security verification request for the trusted execution environment, generate a measurement report based on the measurement value, and feed back the measurement report based on the security verification request.

Optionally, the computer device further includes a memory chip, and the processing chip includes a memory encryption module. The security chip is further configured to: generate a key by using the root of trust, and provide the key to the memory encryption module. The memory encryption module is configured to: encrypt memory data by using the key, provide encrypted memory data to the memory chip and/or obtain encrypted memory data from the memory chip, and decrypt the encrypted memory data by using the key. The memory chip is configured to: store the encrypted memory data and/or provide the encrypted memory data to the memory encryption module.

It may be clearly understood by a person skilled in the art that, for the purpose of convenient and brief description, for an implementation process of the foregoing described security chip, refer to corresponding content in the foregoing embodiments. Details are not described herein again.

In conclusion, in the security chip provided in this embodiment of this application, the security chip and the processing chip are separately disposed, to implement decoupling between the security chip and the processing chip. Security of the security chip may be ensured and endorsed by a vendor of the security chip. In this way, a trust degree of the root of trust in the security chip is no longer subject to a trust degree of a vendor of the processing chip, and a current situation in which construction of the trusted execution environment is limited to the vendor of the processing chip is eliminated, thereby improving a trust degree of confidential computing, and eliminating distrust of a user on the vendor of the processing chip. Because the security chip is decoupled from the processing chip, the security chip can be connected to different types of processing chips, and compatibility of the entire computer device with a plurality of chips is improved. This helps promote development of a large-scale confidential computing application scenario and promote a standardization process of a confidential computing security ecosystem.

An embodiment of this application further provides a computer-readable storage medium. The computer-readable storage medium may be a non-volatile computer-readable storage medium. The computer-readable storage medium includes program instructions. When the program instructions are run on a computer device, the computer device is enabled to perform the operating method for a computer device provided in embodiments of this application.

An embodiment of this application further provides a computer program product including instructions. When the computer program product runs on a computer, the computer is enabled to perform the operating method for a computer device provided in embodiments of this application.

A person of ordinary skill in the art may understand that all or some of the steps of embodiments may be implemented by hardware or a program instructing related hardware. The program may be stored in a computer-readable storage medium. The storage medium may be a read-only memory, a magnetic disk, an optical disc, or the like.

It should be noted that, information (including but not limited to user equipment information and user personal information), data (including but not limited to data used for analysis, stored data, and displayed data), and signals involved in this application are authorized by the user or fully authorized by all parties, and collection, use, and processing of related data need to comply with related laws, regulations, and standards of related countries and regions.

In embodiments of this application, the terms "first", "second", and "third" are merely used for description, but cannot be understood as an indication or implication of relative importance. The term "at least one" means one or more, and the term "a plurality of" means two or more, unless otherwise expressly limited.

The term "and/or" in this application describes only an association relationship for describing associated objects and represents that three relationships may exist. For example, A and/or B may represent the following three cases: Only A exists, both A and B exist, and only B exists. In addition, the character "/" in this specification generally indicates an "or" relationship between the associated objects.

The foregoing descriptions are only optional embodiments of this application, but are not intended to limit this application. Any modification, equivalent replacement, or improvement made within the concept and principle of this application should fall within the protection scope of this application.

## Claims

1. A computer device, wherein the computer device comprises a processing chip and a security chip;
the security chip is configured to: operate a root of trust, boot the processing chip based on the root of trust, and perform trusted control on the processing chip; and
the processing chip comprises a trusted execution environment, the trusted execution environment is constructed based on the root of trust, and the trusted execution environment is used for confidential computing.

2. The computer device according to claim 1, wherein
the security chip is specifically configured to: obtain, by using the root of trust, a firmware image used to boot the processing chip, and after the processing chip is powered on, boot the processing chip by using the firmware image.

3. The computer device according to claim 1 or 2, wherein the root of trust comprises one or more of the following: a root for boot, a root for measurement, and a root for encryption.

4. The computer device according to any one of claims 1 to 3, wherein the processing chip comprises a first access control module;
the first access control module is configured to: receive an access request for the root of trust, and forward the access request to the security chip when the access request has access permission, or reject the access request when the access request does not have access permission; and
the security chip is further configured to respond to the access request.

5. The computer device according to any one of claims 1 to 3, wherein the security chip comprises a second access control module; and
the second access control module is configured to: receive an access request for the root of trust, and respond to the access request when the access request has access permission, or reject the access request when the access request does not have access permission.

6. The computer device according to any one of claims 1 to 3, wherein the processing chip comprises a third access control module, and the security chip comprises a fourth access control module;
the third access control module is configured to: receive an access request for the root of trust, obtain permission indication information of the access request, and forward the access request and the permission indication information of the access request to the security chip; and
the fourth access control module is configured to: respond to the access request when the permission indication information indicates that the access request has access permission, or reject the access request when the permission indication information indicates that the access request does not have access permission.

7. The computer device according to any one of claims 4 to 6, wherein an access request from the trusted execution environment has access permission, and an access request from an outside of the trusted execution environment does not have access permission.

8. The computer device according to any one of claims 1 to 7, wherein the processing chip comprises a first communication protection module, the security chip comprises a second communication protection module, the second communication protection module matches the first communication protection module, and the first communication protection module and the second communication protection module are configured to jointly protect communication between the security chip and the processing chip.

9. The computer device according to claim 8, wherein the first communication protection module and the second communication protection module are specifically configured to protect communication between the security chip and the processing chip according to a key policy.

10. The computer device according to claim 9, wherein the first communication protection module and the second communication protection module are further specifically configured to protect communication between the security chip and the processing chip according to at least one of a signature policy and a timestamp policy.

11. The computer device according to any one of claims 1 to 10, wherein
the security chip is further configured to: receive a measurement value generated by the processing chip in a boot process, receive a security verification request for the trusted execution environment, generate a measurement report based on the measurement value, and feed back the measurement report based on the security verification request.

12. The computer device according to any one of claims 1 to 11, wherein the computer device further comprises a memory chip, and the processing chip comprises a memory encryption module;
the security chip is further configured to: generate a key by using the root of trust, and provide the key to the memory encryption module;
the memory encryption module is configured to: encrypt memory data by using the key, provide encrypted memory data to the memory chip and/or obtain encrypted memory data from the memory chip, and decrypt the encrypted memory data by using the key; and
the memory chip is configured to: store the encrypted memory data and/or provide the encrypted memory data to the memory encryption module.

13. An operating method for a computer device, wherein the computer device comprises a processing chip and a security chip, and the method comprises:
operating, by the security chip, a root of trust, booting the processing chip based on the root of trust, and performing trusted control on the processing chip; and
constructing, by the processing chip, a trusted execution environment based on the root of trust, wherein the trusted execution environment is used for confidential computing.

14. The method according to claim 13, wherein the booting, by the security chip, the processing chip based on the root of trust comprises:
obtaining, by the security chip by using the root of trust, a firmware image used to boot the processing chip; and
after the processing chip is powered on, booting, by the security chip, the processing chip by using the firmware image.

15. The method according to claim 13 or 14, wherein the root of trust comprises one or more of the following: a root for boot, a root for measurement, and a root for encryption

16. The method according to any one of claims 13 to 15, wherein the processing chip comprises a first access control module, and the method further comprises:
receiving, by the first access control module, an access request for the root of trust, and forwarding the access request to the security chip when the access request has access permission, or rejecting the access request when the access request does not have access permission; and
responding, by the security chip, to the access request.

17. The method according to any one of claims 13 to 15, wherein the security chip comprises a second access control module, and the method further comprises:
receiving, by the second access control module, an access request for the root of trust, and responding to the access request when the access request has access permission, or rejecting the access request when the access request does not have access permission.

18. The method according to any one of claims 13 to 15, wherein the processing chip comprises a third access control module, the security chip comprises a fourth access control module, and the method further comprises:
receiving, by the third access control module, an access request for the root of trust, obtaining permission indication information of the access request, and forwarding the access request and the permission indication information of the access request to the security chip; and
responding, by the fourth access control module, to the access request when the permission indication information indicates that the access request has access permission, and rejecting the access request when the permission indication information indicates that the access request does not have the access permission.

19. The method according to any one of claims 16 to 18, wherein an access request from the trusted execution environment has access permission, and an access request from an outside of the trusted execution environment does not have access permission.

20. The method according to any one of claims 13 to 19, wherein the processing chip comprises a first communication protection module, the security chip comprises a second communication protection module, the second communication protection module matches the first communication protection module, and the method further comprises:
jointly protecting, by the first communication protection module and the second communication protection module, communication between the security chip and the processing chip.

21. The method according to claim 20, wherein both the first communication protection module and the second communication protection module protect communication between the security chip and the processing chip according to a key policy.

22. The method according to claim 21, wherein both the first communication protection module and the second communication protection module protect communication between the security chip and the processing chip according to at least one of a signature policy and a timestamp policy.

23. The method according to any one of claims 13 to 22, wherein the method further comprises:
receiving, by the security chip, a measurement value generated by the processing chip in a boot process;
receiving, by the security chip, a security verification request for the trusted execution environment; and
generating, by the security chip, a measurement report based on the measurement value, and feeding back the measurement report based on the security verification request.

24. The method according to any one of claims 13 to 23, wherein the computer device further comprises a memory chip, the processing chip comprises a memory encryption module, and the method further comprises:
generating, by the security chip, a key by using the root of trust, and providing the key to the memory encryption module;
encrypting, by the memory encryption module, memory data by using the key, and providing encrypted memory data to the memory chip; and
storing, by the memory chip, the encrypted memory data.

25. The method according to any one of claims 13 to 24, wherein the computer device further comprises a memory chip, the processing chip comprises a memory encryption module, and the method further comprises:
generating, by the security chip, a key by using the root of trust, and providing the key to the memory encryption module;
providing, by the memory chip, the encrypted memory data to the memory encryption module; and
decrypting, by the memory encryption module, the encrypted memory data by using the key.

26. A security chip, wherein the security chip is the security chip according to any one of claims 1 to 12.

27. A computer-readable storage medium, comprising program instructions, wherein when the program instructions are run on a computer device, the computer device is enabled to perform the method according to any one of claims 13 to 25.

28. A computer program product, wherein when the computer program product runs on a computer, the computer is enabled to perform the method according to any one of claims 13 to 25.
